# EUROPEAN PATENT APPLICATION

(11) **EP 3 139 031 A2**
(43) Date of publication of application: **08.03.2017**
(21) Application number: 16180097.4
(22) Date of filing: 19.07.2016
(51) Int. Cl.: F02N 9/04, F02D 41/00

(54) **METHOD FOR STARTING A LARGE DIESEL ENGINE AND LARGE DIESEL ENGINE**

(30) Priority: 02.09.2015 EP 15183555
(71) Applicant: Winterthur Gas & Diesel AG, 8401 Winterthur (CH)
(72) Inventor: Sudwoj, Gregory, 8482 Sennhof/Winterthur (CH)
(74) Representative: Intellectual Property Services GmbH

(57) **Abstract**

A method is proposed for starting a large diesel engine having a crankshaft and at least one cylinder with a combustion chamber for the combustion of a fuel and with a piston for reciprocating movement between a top dead center position and a bottom dead center position for driving the crankshaft, said method comprising injecting compressed starting air consecutively in each cylinder according to a firing sequence when the piston of the respective cylinder is in the region of the top dead center position, determining a control parameter which is indicative for the firing of the fuel in the respective cylinder and cutting off the compressed starting air for the respective cylinder when the control parameter indicates the firing of the fuel in the respective cylinder. In addition, a large diesel engine, especially a large two-stroke diesel engine, is proposed having a control device being designed for performing this method.

## Description

### Method for starting a large diesel engine and large diesel engine

The invention relates to a method for starting a large diesel according to the preamble of the independent method claim as well as to a large diesel engine, especially a large two-stroke diesel engine, having a control device being designed for performing this method.

Large diesel engines, which can be designed as two-stroke or four-stroke engines, for example as large two-stroke diesel engine with longitudinal scavenging, are often used as main propulsion units for ships or also in stationary operation, for example for driving large generators for the production of electrical power. Here as a rule the engines are in constant operation over a considerable period of time which makes high demands on the operating reliability and availability. For this reason, for the operators, long and predictable intervals between services, low degrees of wear and, an economical use of fuel and operating materials are central criteria for the operation of the machines.

Especially in view of the growing requirements regarding protection of the environment the operation of large diesel engines becomes more and more demanding. Large diesel engines are mostly operated with heavy oil that requires specific measures with regard to the exhaust resulting from the combustion. In view of the stronger statutory provisions regarding the limitation of exhaust a need exists now for several years for so-called dual-fuel motors. These are engines that can be operated with two different fuels. In a gas mode a gas, for example natural gas like LNG (liquefied natural gas) or another suited gas for operating an internal combustion engine is used for the combustion in the cylinders. In a liquid mode a suited liquid fuel like gasoline, diesel or heavy oil is used for the combustion in the cylinders of the same engine.

Within the scope of this application the term "large diesel engine" or the like encompasses also such large engines, which can be operated beside the diesel operation that is characterized by the self-ignition of the fuel, also in an Otto operation that is characterized by an external ignition, or in a mixed form of these two operations.

The starting of a large diesel engine is usually performed by injecting compressed air into the cylinders in order to move the pistons downward and thus starting the crankshaft to rotate. The so-called starting air is provided consecutively to the cylinders according to the firing sequence of the engine, whereas the injection of compressed starting air into the combustion chamber of the respective cylinder is initiated each time, when the piston is at the top dead center or it has just passed it.

The compressed starting air is a valuable good especially on board of ships being propelled by a large diesel engine. If there is no starting air available for starting the engine this may have fatal consequences for the ship and its crew. Usually, the compressed starting air is stored in tanks and the amount of air in the tanks has to be sufficient to ensure several (according to Classification rules) starting procedures without reloading the tanks by means of compressors.

Thus, it is a specific requirement that a several number of starting procedures may be performed only by using the starting air in the tanks without refilling the tanks. For an engine with a fixed pitch propeller (FPP) the number of possible start procedures has to be for example twelve.

Of course there are several measures known in the art to ensure that the starting air may be provided even in such unlikely events that the tanks for the starting air are empty and no electricity is available from the main propulsion engine of the ship for running the compressors to deliver compressed air, however there is a clear demand to minimize the consumption of starting air for starting the main engine.

Also from an economic and environmental point of view it is desirable to minimize the consumption of starting air. The consumption of compressed starting air is for example one of the factors that it is considered when determining the Energy Efficiency Design Index (EEDI) of Vessel or the Engine Room or a large diesel engine. A low consumption of starting air results in a better EEDI and thus indicates a very economic and environment protecting operation of the engine.

According to a known method for starting a large diesel engine the cylinders of the engine are provided with starting air during each working cycle of the engine as long as a predetermined rotational speed of the crankshaft, e.g. 40 rpm, is achieved. For starting the engine the starting air is provided to all cylinders according to the firing sequence of the engine. As soon as the fuel pressure in the pressure reservoir has reached a predetermined value the injection of fuel into the cylinders is started. The injection of starting air is continued for all cylinders until the rotational speed of the crankshaft has reached the predetermined value. Then, the supply of compressed air to all cylinders is stopped by closing the main shut-off valve that connects the tank for the compressed air with the common line that supplies the air to the individual cylinders.

The threshold value for the rotational speed of the crankshaft at which the main shut-off valve is closed is specific for the engine type and size and always comprises a safety margin to ensure starting of the engine even under unfavorable conditions like for example that the engine is not at operating temperature or the vessel is under unfavorable speed or weather conditions. Due to the required very high reliability of the starting process said threshold value is set quite high to ensure a starting of the engine even under bad conditions. Of course this high safety margin results in quite a high consumption of starting air.

Based on that prior art it is therefore an object of the invention to propose a method for starting a large diesel engine that results in a lower consumption of compressed starting air for starting the engine. Furthermore, it is an object of the invention to propose a large diesel engine being designed to perform such a method.

The subjects of the invention satisfying these objects are characterized by the features of the independent claim of the respective category.

Thus, in accordance with the invention a method is proposed for starting a large diesel engine having a crankshaft and at least one cylinder with a combustion chamber for the combustion of a fuel and with a piston for reciprocating movement between a top dead center position and a bottom dead center position for driving the crankshaft, said method comprising injecting compressed starting air consecutively in each cylinder according to a firing sequence when the piston of the respective cylinder is in the region of the top dead center position, determining a control parameter which is indicative for the firing of the fuel in the respective cylinder and cutting off the compressed starting air for the respective cylinder when the control parameter indicates the firing of the fuel in the respective cylinder.

It is the basic idea of the invention to monitor during the starting procedure each cylinder individually and to detect, whether a firing of the fuel in the individual cylinder takes already place. As soon as the firing is detected for an individual cylinder the supply of compressed starting air to this cylinder is cut off for the following working cycles of the diesel engine. By this individual surveillance of each cylinder the amount of starting air for starting the diesel engine is considerably reduced because the supply of starting air is stopped for each cylinder individually as soon as the control parameter indicates a firing for this cylinder. For the following working cycles starting air is only provided to those cylinders where no firing yet takes place. By this a much lower consumption of starting air per starting procedure is realized, which results in a much more economic use of the compressed starting air.

According to a preferred embodiment an injection of fuel into the cylinder is started, when the pressure of the fuel in a pressure reservoir exceeds a predetermined value. Thus, as soon as the fuel is available at a sufficiently high pressure both the fuel and the starting air are injected into the cylinder as long as the control parameter does not indicate a firing of the fuel in said cylinder. When the firing of the fuel takes place the supply of starting air is stopped for this cylinder and the cylinder works in its normal operation.

It is a preferred measure for a large diesel engine having a plurality of cylinders when the amount of supplied compressed starting air per working cycle is reduced for the cylinders in which the firing of the fuel has not yet started, after the control parameter indicates the firing of the fuel in at least one cylinder. When the firing of the fuel has started in at least one cylinder the combustion in this cylinder generates a considerable torque on the crankshaft. Therefore the amount of starting air supplied to the cylinders not yet firing may be reduced because the torque or the force that has to be produced by these cylinders decreases. This measure results in a further reduction of the consumption of compressed starting air.

According to a preferred embodiment the starting air is injected into the cylinder by means of a starting valve arranged at the cylinder for injecting the starting air into the combustion chamber and all starting valves are connected to a common pressure line for supplying compressed starting air to each starting valve. This is an advantageous design to start and to stop the supply of starting air to each cylinder individually. The starting valves are preferably electronically controlled by the engine control system.

It is a preferred measure when a main shut-off valve for the common pressure line is closed for preventing supply of compressed air to the common pressure line as soon as the fuel in each cylinder is firing.

It is particularly preferred, when the control parameter is the acceleration of the crankshaft. This is a control parameter that is individually determinable for each cylinder during each working cycle of the diesel engine based upon data that are available from the engine control system. The angular position of the crankshaft and the rotational speed of the crankshaft are measured and transmitted to the engine control system all the time. Therefore, the acceleration of the crankshaft generated by an individual cylinder or piston, respectively, is always determinable. The supply of compressed starting air to a cylinder increases the crankshaft's rotational speed but the angular acceleration of the crankshaft remains constant only for some time. After that the acceleration decreases due to the limited capacity of the starting air. As soon as the first ignition or firing of fuel in a cylinder takes place the angular acceleration of the crankshaft is immediately considerably increasing. Thus, the acceleration of the crankshaft is a particularly suited control parameter to detect whether a firing of the fuel in a respective cylinder takes already place or not.

It is a further advantage of using the acceleration of the crankshaft as control parameter that all the data for determining this control parameter are anyway available in the diesel engine. Thus, there is no need for additional sensors or other additional hardware. The method according to the invention may be implemented by only adding some additional software.

In addition, the acceleration of the crankshaft is a control parameter which gives instantaneous information whether a firing takes place or not. Thus, there is no delay and the supply of starting air to a specific cylinder can be stopped immediately after the firing in this cylinder starts.

There are a lot of other control parameters available for performing a method according to the invention. The only requirement to the control parameter is that it is indicative for the firing of the fuel in a respective cylinder.

Another preferred control parameters comprises a temperature, in particular the temperature in the combustion chamber of the cylinder or in an exhaust duct of the cylinder.

Furthermore, according to other preferred embodiments the control parameter is based upon an acoustic, an optic or a displacement signal. By means of an acoustic signal the sound of the ignition in a cylinder is detectable. With an optical sensor it is one possibility to detect the burning of the fuel in the cylinder. A displacement sensor may for example measure the displacement of the deformation of the cylinder head caused by the combustion in the respective cylinder.

In order to analyze the starting procedure and to detect possible problems with individual cylinders it is preferred when for each cylinder the firing or a misfiring is recorded and stored in an engine control system.

Preferably, the crew or the operator of the diesel engine is alerted when there is a problem with the starting of a cylinder, i.e. an alarm for a respective cylinder is generated when the misfiring for said cylinder is detected for a predetermined number of consecutive working cycles of the engine.

A further preferred measure is when the firing or the misfiring for each cylinder is recorded and used for a diagnosis of the diesel engine. Thus, the data collected during each starting of the diesel engine may be used during service or during troubleshooting to detect malfunctions or other problems or to narrow the area for the location of failures.

Furthermore, the invention proposes a large diesel engine, especially a large two-stroke diesel engine, having a crankshaft and at least one cylinder with a combustion chamber for the combustion of a fuel and with a piston for reciprocating movement between a top dead center position and a bottom dead center position for driving the crankshaft, and having a control device being designed for performing a method according to anyone of the preceding claims.

This large diesel engine enables a very efficient and economical consumption of the compressed starting air.

The detection of the firing of the fuel in an individual cylinder may be based on data that are anyway available for example in the engine control system. According to other embodiments a sensor is provided for detecting the firing of the fuel in the cylinder.

As already explained hereinbefore the sensor is preferably a temperature sensor or an optical sensor or an acoustic sensor or a displacement sensor.

In particular, the large diesel engine according to the invention may be designed as a dual fuel engine for the combustion of a liquid fuel, preferably heavy oil, and for the combustion of a gas.

Further advantageous measures and preferred embodiments of the invention result from the dependent claims.

The invention will now be explained in more detail with the help of embodiments of the invention.

The invention relates to a method for starting a large diesel engine. The large diesel engine is for example used as a main propulsion unit for a ship or in a stationary operation, e.g. for driving a large generator for the production of electrical power. The large diesel engine has at least one cylinder but typically more, for example up to fourteen cylinders, which are fired during operation according to a predetermined firing sequence that determines the order in which the cylinders are fired. By the movement of the pistons a crankshaft is rotated to which the pistons are connected, for example by way of a piston rod, a cross head and a connecting rod. The crankshaft is connected for example to a propeller for driving the ship or to a generator for producing electric energy.

In each cylinder the top side of the piston and a cylinder cover together with the cylindrical wall of the cylinder are limiting a combustion chamber in which a fuel is injected for the combustion. The cylinder cover is also provided with an exhaust valve to discharge the exhaust gas resulting from the combustion. Modern large diesel engines are usually electronically controlled, i.e. all essential actions like the injection of fuel, the actuation of the exhaust valves and so on are performed by means of electric or electronic signals or commands coming from an engine control system. Furthermore, large diesel engines are often designed with a common rail system for the fuel supply.

In the following description reference is made by way of example to an embodiment, wherein the large diesel engine is designed as a large two-stroke diesel engine with longitudinal scavenging. Since these large diesel engines are well known in the art, there is no need for a detailed description.

Of course, the invention is not restricted to this specific type of a large diesel engine. In particular, the large diesel engine can be designed as two-stroke or four-stroke engine. It is also possible that the large diesel engine is designed as a dual fuel engine for the combustion of a liquid fuel and for the combustion of a gas, for example natural gas. The invention is suited for all large diesel engines in which the starting is performed with the help of compressed air that is delivered to the combustion chambers of the cylinders.

The large two-stroke diesel engine is usually operated with heavy oil. The same is true for the operation of a dual fuel engine in the liquid mode. Nowadays a modern large diesel engine is operated in a fully electronically controlled manner. The engine control system operates and controls all functions of the large diesel engine, for example the operation of the exhaust valves for the gas exchange and the injection process for the fuel, by way of electronic signals and commands. In addition, the engine control system receives information from several detectors, sensors or measuring devices.

The diesel engine has a common rail system that supplies the fuel, e.g. heavy oil, to the combustion chamber of the cylinders. The common rail system comprises a pressure reservoir also called "fuel rail" which contains the fuel to be delivered to the cylinders under a high pressure that essentially corresponds to the injection pressure. One or more fuel pumps in this example two fuel pumps driven by a drive unit which in turn is driven by the rotation of the crankshaft supply the pressure reservoir with the fuel under high pressure. The pressure of the fuel in the pressure vessel during normal operation of the engine has for example a value of 700-900 bar but may also be higher. A fuel high pressure pump which is connected with a reservoir for the fuel delivers the fuel to the fuel pumps.

For maintaining the pressure of the fuel in the pressure reservoir on a constant value a closed-loop control is provided. One or more pressure sensors - in this example two pressure sensors - measure the actual value of the pressure in the pressure reservoir. This value is transmitted to the engine control system and compared with the set value for the pressure. Based upon this comparison the engine control system sends a signal to flow control valves with which the delivery rate of the fuel pumps may be adjusted. By way of this closed-loop control the pressure of the fuel in the pressure reservoir is kept on a constant value during operation of the engine.

The pressure reservoir is in fluid communication with a plurality of electronically controlled injection devices for injecting the fuel into the combustion chamber of the respective cylinder. There is at least one injection device for each cylinder, however in most large diesel engines there are two or three injector devices for each cylinder.

For staring the large diesel engine compressed starting air is provided to the combustion chamber of the cylinders. The starting air is stored in one or more tanks - usually there are at least two tanks for safety reasons - where the compressed air has a pressure for example of 25-30 bar when the tank is completely filled. The tanks may be connected to a common pressure line that extends along all the cylinders. Each cylinder is provided with at least one starting valve that is mounted to the cylinder cover for injecting compressed air to the combustion chamber of the respective cylinder. Each starting valve is in fluid communication with the common pressure line and actuated by electronic commands coming from the engine control system. By these commands each starting valve can be individually opened and closed. Thus, both the beginning of the injection of starting air and the end of the injection of starting air and therewith the amount of starting air supplied to the respective cylinder is controlled by the engine control system.

In the connection between the tank and the common pressure line a main shut-off valve for the compressed air is provided. When the main shut-off valve is in its closed position no air can be supplied from the tank to the common pressure line. When the main shut-off valve is in its opened position the compressed air will flow from the tank into the common pressure line.

In addition, there is at least one compressor provided for refilling the tanks with compressed air.

Now, an embodiment of a method for starting the large diesel engine will be described in more detail. The large diesel engine is in a stopped state. Thus, the crankshaft and the pistons are not moving. In addition, the fuel in the pressure reservoir is not yet under a significant pressure. The diesel engine is at least at a minimum operating temperature of for example about 40°C which is required for a safe starting of the engine.

Depending on the desired direction of rotation of the crankshaft (clockwise or counterclockwise), the firing sequence of the engine and the actual position of the pistons the engine control system determines a suited cylinder to be the first for suppling compressed starting air to. Usually, the starting air is supplied to an individual cylinder when the piston of this cylinder is in the region of its top dead center. Without loss of generality the crank angle is designated with 0° (or 360°) when the piston is in its top dead center position, i.e. when the volume of the respective combustion chamber is at its minimum. The supply of starting air to a given cylinder starts for example at a crank angle of 0° and ends for example at a crank angle of about 110°. For determining the first cylinder to which starting air is supplied, it is preferred to choose such a cylinder in which the piston has just passed the top dead center to ensure that the crankshaft starts to rotate in the desired direction of rotation.

When the first cylinder for starting air injection has been fixed, the main shut-off valve is opened, so that the common pressure line is filled with compressed staring air. The engine control system opens the starting valve of this first cylinder and the compressed air is injected into this cylinder by the starting valve for a predetermined time or crank angle region, respectively. After that, this starting valve is closed. The injected starting air pushes the piston in the cylinder downwardly and the crankshaft starts to rotate.

Successively, the engine control system opens and closes the starting valves of the next cylinders according to the firing sequence of the engine thus accelerating the crankshaft to increase its rotational speed.

As soon as the crankshaft begins to rotate also the fuel pumps that are driven by the crankshaft via the drive unit increase the pressure of the fuel in the pressure reservoir. After some revolutions of the crankshaft, for example about two revolutions, the pressure of the fuel in the pressure reservoir has reached a predetermined or preset value which is considered to be sufficient for starting the injection of fuel into the cylinders. This starting pressure is for example 350-450 bar. As soon as the pressure in the pressure reservoir exceeds this predetermined value the fuel injection in the respective cylinder starts, i.e. both starting air and fuel are injected in the respective cylinder according to the injection parameters delivered by the engine control system.

According to the invention a control parameter which is indicative for the firing of the fuel in a cylinder is determined. In a particularly preferred embodiment the control parameter is or comprises the acceleration of the crankshaft. Thus, for each injection of starting air in one of the cylinders the engine control system determines the resulting acceleration of the crankshaft. Since the angular position as well as the rotational speed of the crankshaft are measured all the time in a large diesel engine, there is no need for an additional sensor. Based upon the angular position of the crankshaft and its rotational speed the acceleration of the crankshaft following the injection of starting air can be determined. As long as the fuel in a respective cylinder is not yet firing, the supply of starting air in said cylinder increases the crankshaft speed but the angular acceleration of the crankshaft remains constant only for some time and then decreases due to the limited capacity of the starting air. This typical behavior of the crankshaft lasts as long as long as no self-ignition of the fuel takes place in the combustion chamber of a cylinder. As soon as the first self-ignition of the fuel takes place in a cylinder, the angular acceleration of the crankshaft is immediately increasing. This considerable change in the acceleration of the crankshaft is recorded by the engine control system instantaneously. Since the angular crankshaft position is known the engine control system is able to determine in which cylinder or cylinders the combustion takes place. Thus, the angular acceleration of the crankshaft is a suited parameter for clearly detecting whether a firing of the fuel in any of the cylinders or in an individual cylinder, respectively, takes already place or not.

As soon as a firing of the fuel has been detected for a specific cylinder by means of the control parameter the supply of compressed starting air to this cylinder is cut-off. During the following working cycles of this cylinder no more starting air is supplied to this cylinder, the starting valve remains closed.

This procedure is applied to all cylinders, i.e. as soon as the control parameter indicates a firing for a specific cylinder the supply of starting air is stopped for this cylinder and the corresponding starting valve remains in the closed position for all the following working cycles of this cylinder.

At the latest when the firing for all the cylinders has been detected the main shut-off valve for the common pressure line is closed. The large diesel engine is now under normal operation and the starting procedure is finished.

It is also possible to already close the main shut-off valve at an earlier point in time, i.e. when not yet each cylinder is firing. If self-ignition of the fuel already takes place in a sufficient number of cylinders but not yet in all, the main shut-off valve may be closed thus preventing the further supply of compressed starting air to the common pressure line, because the power generated by the cylinders in which the firing already takes place is sufficient to drive the pistons of those cylinders in which the firing of the fuel does not yet take place. In addition, the remaining compressed air in the common pressure line after the closure of the main shut-off valve may be sufficient for a few additional injections of starting air into the cylinders.

The appropriate point in time to close the main shut-off valve for the compressed starting air depends on the type of engine, the number of cylinders and some additional factors. However, it is no problem for a skilled person to choose an appropriate timing for the closing of the main shut-off valve. Usually the closing of the main shut-off valve is the termination of the starting of the diesel engine. After this closing or some revolution later usually the fuel in all cylinders is firing and the engine is under normal operation.

This method for starting a large diesel engine which is based on the principle to individually cut off the starting air for at least some cylinders renders possible a much more efficient and economic use of the starting air which is also an important advantage from a safety perspective.

The method according to the invention has the additional advantage that the starting procedure is applicable independently from external conditions for example the ambient conditions in the engine room like temperature, humidity and so on, the condition of the sea (currents, calm water or heavy sea conditions), vessel draft, vessel speed, weather, as well as from internal conditions of the engine, like engine temperature, actual pressure of the fuel in the pressure reservoir and so on. For each combination of internal and external conditions the method according to the invention allows an efficient control of the starting procedure and its duration with a very economic consumption of compressed starting air. As compared to known methods the method according to the invention results in considerably less air consumption for a starting procedure of the engine, less energy consumption and the preservation of compressed starting air therewith rendering possible an increased number of starting procedures with the same amount of compressed air in the tanks.

A preferred measure to even more reduce the consumption of starting air for a starting procedure is to reduce the amount of starting air supplied per working cycle to those cylinders in which the firing of the fuel has not yet started as soon as the control parameter indicates the firing of the fuel in at least one of the cylinders. As soon as at least one cylinder has started firing this cylinder generates a driving power for the crankshaft, so that the supply of starting air to a cylinder that is not yet firing may be reduced.

The acceleration of the crankshaft as control parameter for detecting the firing of the fuel in a cylinder is a control parameter that is based upon data which are all the time available in the engine control system and that instantaneously indicates the beginning of the firing in a cylinder. Using this control parameter has the advantage that no additional components, sensors or hardware is required for performing a method according to the invention. The method according to the invention can be performed by a control device that is integrated into the engine control system of a large diesel engine. Since no additional hardware components are necessarily required the method can be offered as a computer software product, for example as an additional software feature for implementation into the engine control system.

Of course, it is also possible that the control parameter is or comprises another parameter than the acceleration of the crankshaft. Basically, each parameter is suited that is indicative for the firing of the fuel in a cylinder. It is preferred to use such control parameters that are based upon data which are anyway available in the engine. This may be for example a temperature, in particular the temperature in the combustion chamber of the cylinder or in an exhaust duct of the cylinder. Both temperatures will remarkably rise in case a firing of the fuel takes place in the cylinder.

Furthermore, it is also possible to base the control parameter on or to determine the control parameter from a signal of a sensor that is designed and adapted to recognize the firing of the fuel in a cylinder. Although this may require additional components and hardware for example additional sensors however the benefits of saving compressed starting air clearly exceed the additional costs for additional sensors at the cylinders. The control parameter may be based upon, for example, an acoustic signal indicating the change in acoustic emission of the cylinder when the firing starts in that cylinder, or an optic signal of a sensor that is adapted to optically detect the burning of the fuel in the respective cylinder. Still another possibility is to use a displacement signal, for example of a piezo-like sensor, to detect the displacement or a deformation of the cylinder cover of a respective cylinder that is caused by the firing of the fuel in said cylinder.

In addition, the method according to the invention may also be used advantageously for diagnostic purposes. According to a preferred embodiment it is recorded or stored, for example in the engine control system, for each working cycle of each cylinder during the starting procedure whether the respective cylinder is firing or misfiring. Misfiring means that the fuel injected in the respective cylinder does not yet ignite. Preferably this recording starts at the latest when the injection of fuel into the cylinders is started.

Thus, it becomes detectable whether there is one or more specific cylinder(s), in which the firing does not start within a given range of working cycles. This indicates that there is a disturbance or a malfunction regarding the specific cylinder. Identifying such specific cylinders considerably narrows the area of troubleshooting because it is possible to clearly recognize which cylinder(s) do not work properly.

According to a preferred embodiment an alarm is generated for a specific cylinder when the misfiring for said cylinder is detected for a predetermined number of consecutive working cycles of this cylinder.

The data relating to the firing or the misfiring for each cylinder during a starting sequence are preferably recorded and stored in the engine control system. Upon service or maintenance work on the engine, these stored data may be advantageously used for a diagnosis of the diesel engine indicating or helping to localize problems of the diesel engine that have to be attended to during the service

In the large diesel engine according to the invention a control device is provided which is designed for performing the method. Preferably the control device is integrated into the engine control system and comprises a software product adapted to perform the method for starting the large diesel engine.

It may be advantageous in embodiments of the large diesel engine according to the invention, when the diesel engine has one or more additional sensor(s) for detecting the firing of the fuel in each cylinder individually. For example, the sensors can be optical sensors, acoustic sensors or displacement sensors or strain gauge sensors or combinations thereof.

The method according to the invention or the control device for performing this method can be applied to all reciprocating internal combustion engines with for example electronic crankshaft position and speed measurement and using the injection of starting air into the cylinders for starting the engine.

## Claims

1. Method for starting a large diesel engine having a crankshaft and at least one cylinder with a combustion chamber for the combustion of a fuel and with a piston for reciprocating movement between a top dead center position and a bottom dead center position for driving the crankshaft, said method comprising injecting compressed starting air consecutively in each cylinder according to a firing sequence when the piston of the respective cylinder is in the region of the top dead center position, determining a control parameter which is indicative for the firing of the fuel in the respective cylinder and cutting off the compressed starting air for the respective cylinder when the control parameter indicates the firing of the fuel in the respective cylinder.

2. Method in accordance with claim 1, wherein an injection of fuel into the cylinder is started, when the pressure of the fuel in a pressure reservoir exceeds a predetermined value.

3. Method in accordance with anyone of the preceding claims, wherein the large diesel engine has a plurality of cylinders and wherein the amount of supplied compressed starting air per working cycle is reduced for the cylinders in which the firing of the fuel has not yet started, after the control parameter indicates the firing of the fuel in at least one cylinder.

4. Method in accordance with anyone of the preceding claims wherein the starting air is injected into the cylinder by means of a starting valve arranged at the cylinder for injecting the starting air into the combustion chamber and wherein all starting valves are connected to a common pressure line for supplying compressed starting air to each starting valve.

5. Method in accordance with claim 4, wherein a main shut-off valve for the common pressure line is closed for preventing supply of compressed air to the common pressure line as soon as the fuel in each cylinder is firing.

6. Method in accordance with anyone of the preceding claims, wherein the control parameter is the acceleration of the crankshaft.

7. Method in accordance with any one of the preceding claims, wherein the control parameter is a temperature, in particular the temperature in the combustion chamber of the cylinder or in an exhaust duct of the cylinder.

8. Method in accordance with anyone of the preceding claims wherein the control parameter is based upon an acoustic, an optic or a displacement signal.

9. Method in accordance with anyone of the preceding claims wherein for each cylinder the firing or a misfiring is recorded and stored in an engine control system.

10. Method in accordance with claim 9, wherein an alarm for a respective cylinder is generated when the misfiring for said cylinder is detected for a predetermined number of consecutive working cycles of the engine.

11. Method in accordance with anyone of the preceding claims wherein the firing or the misfiring for each cylinder is recorded and used for a diagnosis of the diesel engine.

12. Large diesel engine, especially large two-stroke diesel engine, having a crankshaft and at least one cylinder with a combustion chamber for the combustion of a fuel and with a piston for reciprocating movement between a top dead center position and a bottom dead center position for driving the crankshaft, and having a control device being designed for performing a method according to anyone of the preceding claims.

13. Large diesel engine in accordance with claim 12 having a sensor for detecting the firing of the fuel in the cylinder.

14. Large diesel engine in accordance with claim 13, wherein the sensor is a temperature sensor or an optical sensor or an acoustic sensor or a displacement sensor.

15. Large diesel engine in accordance with anyone of claims 12-14, designed as a dual fuel engine for the combustion of a liquid fuel, preferably heavy oil, and for the combustion of a gas.
